# EUROPEAN PATENT APPLICATION

(11) **EP 4 576 360 A1**
(43) Date of publication of application: **25.06.2025**
(21) Application number: 23218863.1
(22) Date of filing: 20.12.2023
(51) Int. Cl.: H01M 50/24

(54) **BATTERY VENTING SYSTEM**

(71) Applicant: Rimac Technology LLC, 10431 Sveta Nedelja (HR)
(72) Inventor: Gracin, Roko, 10000 Zagreb (HR)
(74) Representative: Sonnenberg Harrison Partnerschaft mbB

(57) **Abstract**

A battery system with at least one energy storage unit, a support element, and a structure element is described. The support element extends in a first direction and is made from a first material. The support element couples a unit bottom surface of the at least one energy storage unit to a base surface of the battery system. The structure element is made from a second material and arranged adjacent to the support element at at least two sides of the structure element. The two sides are opposite to each other in a second direction perpendicular to the first direction.

## Description

### FIELD OF THE INVENTION

The field of the invention relates to a battery system, a method for assembling the battery system, and an energy storage system comprising the battery system.

### BACKGROUND OF THE INVENTION

In recent years, there has been a growing awareness of the need to transition towards sustainable and environmentally friendly practices. One critical aspect of this transition is the adoption of electric vehicles as an alternative to traditional internal combustion engine vehicles. Electric vehicles offer significant benefits, such as reduced greenhouse gas emissions and lower operational costs. At the heart of these electric vehicles lies their energy storage system - the battery, which is also a main cost factor of electric vehicles. Batteries of future electric vehicles need to meet increasingly demanding mechanical and cost-related requirements.

Mechanical stability and rigidity and a robust design of electric vehicle batteries are beneficial to preserving overall vehicle safety and ensuring optimal performance while minimizing the risk of damage or failure during mechanical stress, such as sudden impacts or road irregularities. The battery must withstand various mechanical stresses, including vibrations, impacts, and extreme temperature variations, to ensure both safety and long-term functionality. Robust housing materials and design are beneficial for protecting the delicate and costly internal components and preventing hazardous situations, like short circuits or thermal runaway. Adequate cooling and thermal management systems are necessary to maintain optimal operating conditions.

Mechanical stability and rigidity of the battery ensures that the battery can endure the demands of everyday driving, preserving its efficiency and safety while also contributing to the vehicle's overall stability and crashworthiness. Moreover, a rigid battery structure helps to prevent excessive chassis flex, resulting in more predictable and responsive handling and ultimately enhancing the overall driving experience and safety of the vehicle.

The internal design of a battery pack such as the arrangement of battery modules and individual cells within the battery pack influences the overall mechanical stability and rigidity of the battery. A well-organized layout of the battery modules and cells helps evenly distribute mechanical load and thus reducing stress concentrations. Battery packs can further incorporate internal structural reinforcements, such as metal or composite frames, to provide additional support and rigidity. These reinforcements help to prevent deformation or twisting during dynamic vehicle movements, improving mechanical stability of the battery.

The manner in which battery cells and modules are connected and fastened inside the battery pack further affects the mechanical stability and rigidity of the battery. Interconnects and fastening mechanisms can ensure that the battery components remain securely in place and that loads can be distributed through the battery. The precision and quality of manufacturing processes for the battery are further essential. Accurate assembly and tight tolerances reduce the risk of structural imperfections and ensure consistent performance regarding mechanical stability and rigidity.

The battery cells of an electric vehicle's battery can be coupled to each other and to the housing using foam overmolding. A polymeric foam material can be applied around individual battery cells during assembly of the battery to enhance protection of the cells and to improve mechanical stability and rigidity of the whole battery. Cells are placed and positioned within a mold such as a housing and a liquid foam material is injected into the mold, encasing the cells. As the foam cures, it adheres to the cells, creating a protective, cushioning layer and interconnecting the cells to each other and to the housing. Foam overmolding further provides impact resistance, thermal insulation, and vibration damping, safeguarding the cells from mechanical stresses while maintaining an efficient operating temperature.

The positioning of the battery cells before and during foam overmolding is an important step in the manufacturing process to ensure both the mechanical stability and rigidity of the battery. Individual battery cells are arranged into the mold in a specific configuration according to the design requirements of the battery and therefore need to be sufficiently supported. This arrangement typically includes both the orientation and physical placement of cells within the mold. Structural elements may be used to support the battery cells and maintain precise spacing, positioning, and alignment of the battery cells. These structural elements help to ensure the cells remain properly positioned and maintain consistent spacing during the foam overmolding process. Controlled cell positioning further ensures that the foam encapsulation effectively provides protection, insulation, and vibration damping to the battery cells.

Electric vehicle batteries further need to prevent dangerous thermal situations such as thermal runaway. Thermal runaway in a battery is an uncontrolled, self-accelerating process characterized by a rapid increase in temperature due to internal chemical reactions. Thermal runaway can lead to overheating, gas generation, and potentially catastrophic failure, posing severe safety risks. When a battery cell goes to thermal runaway, vent gases from this battery cell need to be expelled out of the battery pack through designated emergency venting ports or outlets to prevent these gases causing a thermal event in further battery cells. The vent gases can be ducted away through venting channels, which allow the vent gases to expand and lead the vent gases toward the designated emergency venting ports or outlets of the housing. Additional components need to be provided in the battery pack to provide these venting channels and to ensure these venting channels are not blocked by foam entering the channels during the foam overmolding process. The venting channels provided can further comprise volumes filled with air. This may require pressure equalization or breathing management, which adversely affects the complexity and cost of the battery.

The need for providing venting channels below the battery cells and the need for mechanical support of the battery cells therefore represent competing requirements. Known electric vehicle batteries therefore compromise on both the efficiency of ducting away the vent gases and the support or mechanical stability of the battery cells.

### SUMMARY OF THE INVENTION

Against this background, it is an objective of the present invention to provide an improved battery system, a method for assembling the improved battery system, and an energy storage system comprising the improved battery system.

This objective is achieved by a battery system having the features of claim 1. The object is further achieved by a method for assembling the battery system having the features of claim 15 and an energy storage system comprising the battery system having the features of claim 16.

A battery system is disclosed in the present document. The battery system comprises at least one energy storage unit and a support element. The support element extends in a first direction and is made from a first material. The support element further couples a unit bottom surface of the at least one energy storage unit to a base surface of the battery system. The battery system further comprises a structure element made from a second material. The structure element is arranged adjacent to the support element at at least two sides of the support element. The two sides are opposite to each other in a second direction perpendicular to the first direction.

The present invention therefore relates to a battery system with components for providing venting channels below the battery cells in case of a thermal event on the one hand and for providing mechanical or structural support of the battery cells on the other hand. Mechanical support at a venting side of the battery cells is ensured by the first material which can melt or significantly reduce in volume upon being heated by hot vent gases, therefore forming a void or venting channel which can duct the vent gases away from the battery cells and outside the battery system. The battery system according to the invention therefore provides an improved efficiency of ducting away the vent gases from the battery cells and improved support and mechanical stability of the battery cells.

The term "battery system" refers to a device designed to store electrical energy and supply electrical energy to a load connected to the battery system. The battery system preferably is further designed to receive electrical energy, which is then stored. The battery system can be an electrochemical device such as a battery or rechargeable battery. When connected to a circuit, the battery system transfers electrons, creating electric current. The battery system can be an AC battery supplying alternating current or can be a DC battery supplying direct current. The battery system may alternatively be or include a battery which can supply both alternating current and direct current. The battery system according to the invention can flexibly be used in different application scenarios. The battery system can be a battery pack comprising a plurality of battery modules, or can alternatively be a battery module comprising a plurality of energy storage units. The battery system can be particularly but not exclusively used and/or suitable as a traction battery for a battery electric vehicle (BEV), a plug-in hybrid electric vehicle (PHEV), a hybrid electric vehicle (HEV), or a fuel cell electric vehicle (FCEV).

The term "energy storage unit" refers to individual components and/or units within the battery system that store and/or deliver electrical energy. These energy storage units can include single battery cells, battery modules having multiple battery cells, supercapacitors, photovoltaic cells, fuel cells, electromechanical power converters, and/or capacitive energy sources or any other energy storage units capable of storing and delivering electrical energy. The battery cells can be, for example, cylindrical cells, prismatic cells, and/or pouch cells.

The term "support element" refers to a component of the battery system for providing mechanical or structural support to the at least one energy storage unit. The support element preferably has a bar-like or a rod-like shape with an extension in the first direction which is greater to an extension in directions perpendicular to the first direction. The support element can further have a plate-like shape with greater dimensions in a plane defined by the first direction and the second direction and a smaller dimension in a third direction perpendicular to the first direction and the second direction compared to the dimensions in the first direction and the second direction. In the case of a plate-like shape, the support element can comprise a plurality of sub-structures arranged in parallel to each other, each sub-structure adapted to support energy storage units. The battery system can comprise only one support element or a plurality of support elements arranged preferably parallel to each other.

The term "first material" refers to a material with a heat or flame/fire resistance which is smaller than the heat or flame/fire resistance of the second material. The first material can be a porous material such as foam.

The term "unit bottom surface" refers to a surface of the at least one energy storage unit which faces towards the support element, and which faces in the third direction. The use of the term "bottom" is not restrictive of the invention and the unit bottom surface can, for example, also be located at a top position of the energy storage unit.

The term "base surface" refers to a surface of the battery system facing towards the support element and towards the at least one energy storage unit.

The term "couples" refers to the physical coupling or interconnection of two or more components or systems, allowing them to interact and influence each other's behavior. Physical coupling involves the direct or indirect physical connection between two or more components or systems. This connection allows for the transfer of forces, motion, or energy between the components or systems. Indirect physical coupling involves a connection between two components or systems that are not in direct physical contact but interact through intermediary physical means. The support element can therefore transfer force to the energy storage unit and therefore support the energy storage unit. The support element can directly transfer force to the energy storage unit by direct contact of the unit's bottom surface with the base surface. The support element can alternatively indirectly transfer force to the energy storage unit by direct contact of the unit's bottom surface with a further component such as the structure element and direct contact of the further component with the base surface, in case this further component is arranged between the support element and the energy storage unit.

The term "structure element" refers to a component of the battery system which is in contact with the at least one energy storage unit to enhance protection of the at least one energy storage unit and to improve mechanical stability and rigidity of the battery system. The structure element is made from a second material, the term "second material" referring to a material such as a polymeric foam material which can be applied to the battery system by foam overmolding. The second material can be, for example, one of silicone foam, epoxy foam, and polyurethane foam. The structure element can be one integral component or can comprise a plurality of separate components.

The term "two sides" refers to two sides of the support element, wherein the two sides are opposite to each other in the second direction. In other words, the support element is surrounded by the structure element as viewed in the second direction. The structure element therefore forms a venting channel substantially extending in the first direction if the support element is melted or reduced in volume due to contact with hot vent gases. The structure element can alternatively surround the support element around at least three sides or around at least four sides of the support element. In other words, the structure element can also be arranged between the base surface and the support element and/or between the unit bottom surface and the support element.

According to a first aspect, the first material can melt or significantly reduce in volume upon exposure to temperatures above a predetermined value, preferably above 100°C. Alternatively, the predetermined value can be 200°C.

Melting of the first material or reduction in volume of the first material due to contact with hot vent gases in case of a thermal event within the at least one energy storage unit leads to the creation of free or empty volume along the extension of the support element and therefore allows providing one or more venting channels to guide the vent gases away from the at least one energy storage unit.

According to a second aspect, the first material can be one of Styrofoam, polyurethane, and polymethyl methacrylate (PMMA) foam or any other foam suitable for lost foam casting. Using these materials allows facilitating the melting or volume reduction of the support element due to exposure to the hot vent gases.

According to a third aspect, the heat resistance of the first material can be lower than the heat resistance of the second material. The term "heat resistance" refers to a material's ability to withstand elevated temperatures without undergoing substantial degradation or melting. Melting refers to the phase transition from a solid to a liquid state, and materials with high heat resistance can resist such transitions, maintaining their structural integrity and functional properties even in the presence of intense heat. Degradation refers to the process of breaking down or deteriorating, where the material's molecular structure may be compromised, leading to a decline in performance or physical properties.

Providing the second material with a higher heat resistance than the heat resistance of the first material allows the structure element to maintain its integrity even in case of a thermal event in the at least one energy storage unit and therefore to reliably guide the vent gases in the venting channel(s) formed within the structure element. Providing the second material with a higher heat resistance than the heat resistance of the first material further ensures that the support element melts or reduces in volume and that the vent gases are ducted away and out of the battery system before an endured exposure of the second material to the hot vent gases would lead to a melting or reduction in volume also of the second material.

According to a fourth aspect, the support element can have a solid cross-section in a plane perpendicular to the first direction. The term "solid cross-section" refers to a geometric profile that is continuous and lacks macroscopic voids or openings. It signifies a component with a cohesive and uninterrupted material composition throughout its entire cross-section. The term "solid cross-section" does refer to the geometric shape of the cross-section, but not to the composition of the material itself. The porous structure of foam which is characterized by a cellular structure composed of interconnected voids or gas-filled pockets within the material can in this regard also form a component with a solid cross-section.

Providing the support element with a solid cross-section allows providing sufficient volume which cannot be filled with the second material during the foam overmolding process and therefore providing sufficient volume for forming the venting channels in case of a thermal event. Providing the support element with a solid cross-section further allows preventing significant free or empty volumes filled with air within the battery system, which could require pressure equalization or breathing management.

According to a fifth aspect, the support element can comprise a hollow volume extending in the first direction. The term "hollow volume" refers to a free or empty volume encompassed within or being part of the support element and extending along the first direction, for example in the form of a channel. The hollow volume is not filled with any solid material and can be filled with air.

The hollow volume is provided for receiving and guiding the vent gases along the first direction to allow faster melting of the first material of the support element in directions perpendicular to the first direction. The hollow volume facilitates melting of the first material by enlarging the surface of the first material in contact with the vent gases.

According to a sixth aspect, the battery system can further comprise a housing and the base surface can be a housing bottom surface of the housing. The term "housing" refers to an enclosure or case and preferably refers to a protective container or casing that encompasses some or all components of the battery system. The housing provides physical protection to the components inside and often incorporates features like insulation, ventilation, and/or sealing to ensure safe and efficient operation of the battery system. The housing can also protect the battery system from water and moisture exposure. The term "housing bottom surface" refers to an inner surface of the housing facing the at least one energy storage unit. The use of the term "bottom" is not restrictive of the invention and the housing bottom surface can, for example, also be located at a top position of the housing.

The support element allows supporting the at least one energy storage unit with regard to the housing.

According to a seventh aspect, the battery system can further comprise at least two energy storage units arranged adjacent to each other in the first direction and the structure element can be arranged between the at least two energy storage units and/or between ones of the at least two energy storage units and the housing.

The support element allows supporting the at least two energy storage units and to guide the vent gases away from any one of the at least two energy storage units in case of a thermal event using only one support element. The arrangement of the structure element between the at least two energy storage units and/or between ones of the at least two energy storage units and the housing contributes to the overall performance and safety of the battery. The structure element provides a protective barrier around the energy storage units and provides mechanical connection between the energy storage units and the housing and mechanical protection against impacts, vibrations, and external forces. The structure element can further act as an insulating material, and the coverage of the surface of the energy storage units with the structure element helps to maintain a more consistent internal temperature within the battery system. This insulation minimizes heat transfer between energy storage units, reducing the risk of thermal runaway and ensuring more stable operating conditions.

According to an eight aspect, the support element can be in direct contact with the unit bottom surface and the housing bottom surface. The term "direct contact" refers to the support element being in physical contact with the unit bottom surface and with the housing bottom surface, without any other parts or components in between.

This allows positioning of the energy storage units by the support element before and during foam overmolding which is an important step in the manufacturing process to ensure both the mechanical stability and rigidity of the battery system. Individual energy storage units can be arranged into the housing in a specific configuration according to the design requirements of the battery system. The support element supports the energy storage units in a direction perpendicular to the first direction and to the second direction, and enables a defined positioning of the energy storage units with regard to this direction (also called datuming of the energy storage units).

According to a ninth aspect, a space defined by the unit bottom surface of the at least one energy storage unit and the base surface can be entirely occupied with the first material and the second material. No further components other than the support element and the structure element are needed to provide venting channels as well as structural support to the energy storage units.

According to a tenth aspect, the at least one energy storage unit can comprise a vent burst disc facing the support element. The term "vent burst disc" refers to a safety feature designed to release excess pressure within ones of the energy storage units. The vent burst disc can comprise a thin, pressure-sensitive membrane which ruptures if the internal pressure of the ones of the energy storage units reaches a dangerous level, preventing potential hazards like overcharging or thermal runaway. This controlled venting of gas from the ones of the energy storage units helps protect the battery system from damage or explosion. The vent gases passing the vent burst disc can further penetrate the structure element in case part of the structure element is located between ones of the energy storage units and the support element. The vent gases can thus be guided away through the venting channel formed by the first material melting or reducing in volume. The vent gases therefore cannot affect further ones of the plurality of energy storage units.

According to an eleventh aspect, the vent burst disc of the at least one energy storage unit can overlap at least partially with the support element. This facilitates the guiding of the vent gases from the inside of the at least one energy storage unit through the venting channels and away from the at least one energy storage unit.

According to a twelfth aspect, the at least one energy storage unit can be one of battery cells and battery modules.

According to a thirteenth aspect, the housing can comprise an outlet, the outlet being in contact with the first material. The term "outlet" refers to a designated emergency venting port or outlet adapted to release the hot vent gases from inside the housing to the outside of the housing, to prevent these gases causing a thermal event in further energy storage units. The term "being in contact" refers to the outlet being in physical contact with the first material of the support element to enable a continuous venting channel to be formed from the at least one energy storage module to the outlet when the first material melts or reduces in volume due to contact with the hot vent gases.

A method for assembling the battery system as claimed herein before and hereinafter is further disclosed in the present document. The method comprises the step of arranging at least one energy storage unit on a support element, wherein the support element extends in a first direction and is made of a first material. The method further comprises the step of arranging the support element together with the at least one energy storage unit on a base surface, such that the support element couples a unit bottom surface of the at least one energy storage unit to the base surface. The method further comprises injecting a second material into the battery system. The method allows assembling the battery system in a time- and cost-efficient way.

An energy storage system comprising the battery system as claimed herein before and hereinafter is further disclosed in the present document. The term "energy storage system" refers to an integrated network of components and processes designed for the generation, conversion, transmission, and/or utilization of electrical energy. The energy storage system can encompass one or more of power sources, storage devices, and distribution systems, facilitating the controlled and efficient flow of energy. Non-limiting examples for an energy storage system can be an electric vehicle or a stationary charging system for electric vehicles.

Advantageous aspects and/or embodiments of the present disclosure are the subject matter of the dependent claims. Any and all combinations of at least two features disclosed in the description, the claims, and/or the figures fall within the scope of the present disclosure. Naturally, the explanations given in connection with the battery system equivalently relate to the method and/or the energy storage system according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features or aspects and/or embodiments that are described above or below with respect to the exemplary aspects and/or embodiments. In this case, a person skilled in the art will also add individual aspects as improvements or supplementations to the respective basic form of the invention.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

### DESCRIPTION OF THE FIGURES

FIG. 1A shows a cross-sectional view of a first embodiment of a battery system.
FIG. 1B shows a cross-sectional view of a second embodiment of a battery system 10.
FIG. 2 shows a further cross-sectional view of the first embodiment of the battery system.
FIG. 3 shows a further cross-sectional view of the first embodiment of the battery system.
FIG. 4 shows a further cross-sectional view of the first embodiment of the battery system.
FIG. 5 shows a further cross-sectional view of the first embodiment of the battery system.
FIG. 6 shows a cross-sectional view of a third embodiment of a battery system.
FIG. 7 shows a cross-sectional view of a fourth embodiment of a battery system.
FIG. 8 shows a cross-sectional view of a fifth embodiment of a battery system.
FIG. 9 shows a cross-sectional view of a sixth embodiment of a battery system.
FIG. 10 shows a cross-sectional view of a seventh embodiment of a battery system.
FIG. 11 shows a flow-chart of a method for assembling a battery system.

### DETAILED DESCRIPTION OF THE INVENTION

The invention will now be described on the basis of the figures. It will be understood that the aspects and/or embodiments of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

Unless indicated to the contrary, elements that are the same or functionally similarly have been given the same reference signs in the figures. It should also be noted that the illustrations in the figures are not necessarily true to scale.

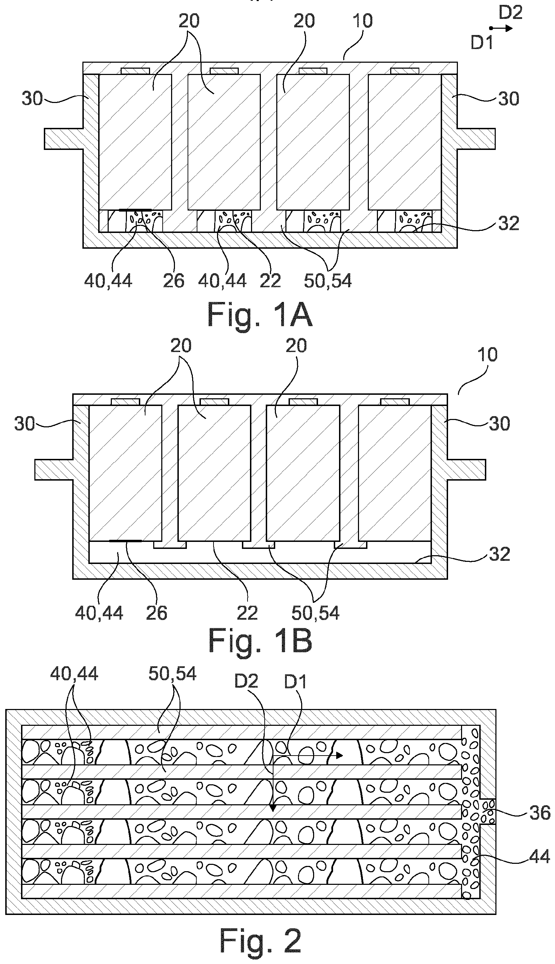

FIG. 1A shows a cross-sectional view of a first embodiment of a battery system 10. The battery system 10 comprises a housing 30 encompassing the components of the battery system 10. The battery system 10 further comprises a plurality of energy storage units 20. The battery system 10 can alternatively comprise a different number of energy storage units 20 and can have the energy storage units 20 arranged differently. The battery system 10 further comprises four support elements 40, each of which has a bar-like shape substantially extending in a first direction D 1.

Each of the support elements 40 supports ones of the plurality of energy storage units 20. The plurality of the energy storage units 20 are therefore arranged in lines extending in the first direction D1 corresponding to the extension of the support elements 40.

The support elements 40 are arranged in parallel to each other and are evenly distributed in a second direction D2 perpendicular to the first direction D1. The support elements 40 are in direct contact with a housing bottom surface 32 of the housing 30 and with a unit bottom surface 22 of ones of the plurality of energy storage units 20. The support elements 40 are made from a first material 44.

The battery system 10 further comprises a structure element 50 arranged between ones of the plurality of the energy storage units 20 and between ones of the plurality of the energy storage units 20 and the housing 30. The structure element 50 is made from a second material 54.

The plurality of the energy storage units 20 each comprise a vent burst disc 26 arranged at the respective unit bottom surface 22. The plurality of the energy storage units 20 are arranged on the support elements 40 such that the vent burst discs 26 coincide with the respective support elements 40.

The support elements 40 could alternatively or additionally be arranged on a side or on top of ones of the plurality of the energy storage units 20.

FIG. 1B shows a cross-sectional view of a second embodiment of a battery system 10. The battery system 10 comprises one support element 40 with a plate-like structure. The support element 40 is an integral component and can be described as a component comprising the four support elements 40 of the first embodiment of the battery system 10 as described in FIG. 1A, wherein the four support elements 40 are connected to each other. The support element 40 is configured to support a plurality of energy storage units 20. The plurality of energy storage units 20 are arranged in four lines on the support element 40.

FIG. 2 shows a further cross-sectional view of the first embodiment of the battery system 10. The housing 30 comprises an outlet 36 which is in contact with the first material 44. The outlet 36 is therefore continuously connected to the support elements 40 via the first material 44. The outlet 36 can comprise one single outlet or a plurality of outlets, for example one outlet for each of the support elements 40.

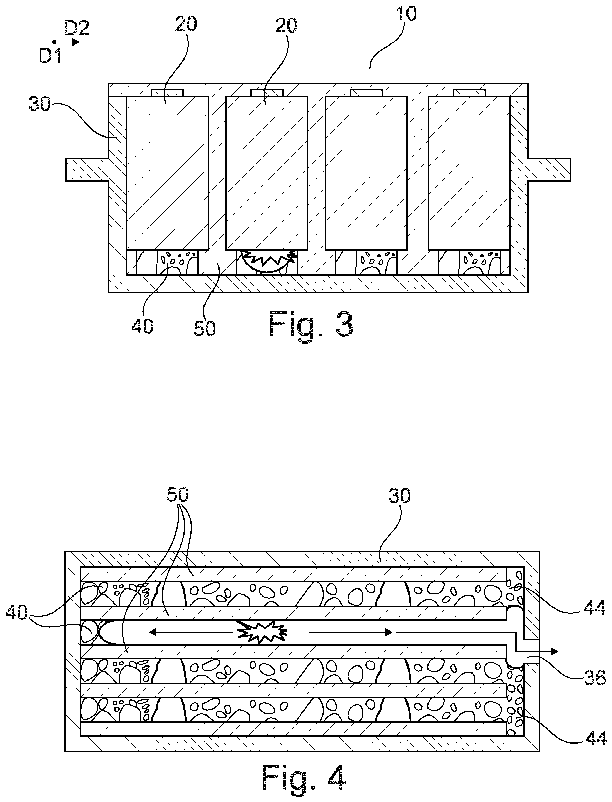

FIG. 3 shows a further cross-sectional view of the first embodiment of the battery system 10. In the case of a thermal event in one of the plurality of the energy storage units 20, hot vent gases are expelled from the respective energy storage unit 20 through its vent burst disc 26. The hot gases will melt their way through the first material 44 of the support element 40 and will thus free the space occupied by the support element before. A venting channel is thus formed to allow the hot gases to flow or be guided towards the outlet 36. Styrofoam as an example for the first material 44 collapses to around 1/50 of its original volume, with very low-heat input, when heated to around 210°C.

Alternatively, or additionally, part of the structure element 50 can be located between ones of the support elements 40 and the respective ones of the plurality of the energy storage units 20. This can lead to the respective ones of the plurality of the energy storage units 20 not being in direct contact with the support element 40 because a layer of the second material 54 is located in between. In such a case, the hot vent gases can rupture through the layer of second material 54 to reach and melt the first material 44.

FIG. 4 shows a further cross-sectional view of the first embodiment of the battery system 10. The hot vent gases expelled from one of the plurality of energy storage units 20 melted their way through the first material 44 of the support element 40 from the energy storage unit 20 to the outlet 36. A venting channel is therefore created from the energy storage unit 20 to the outlet 36 and the vent gases can be guided to the outside of the housing 30.

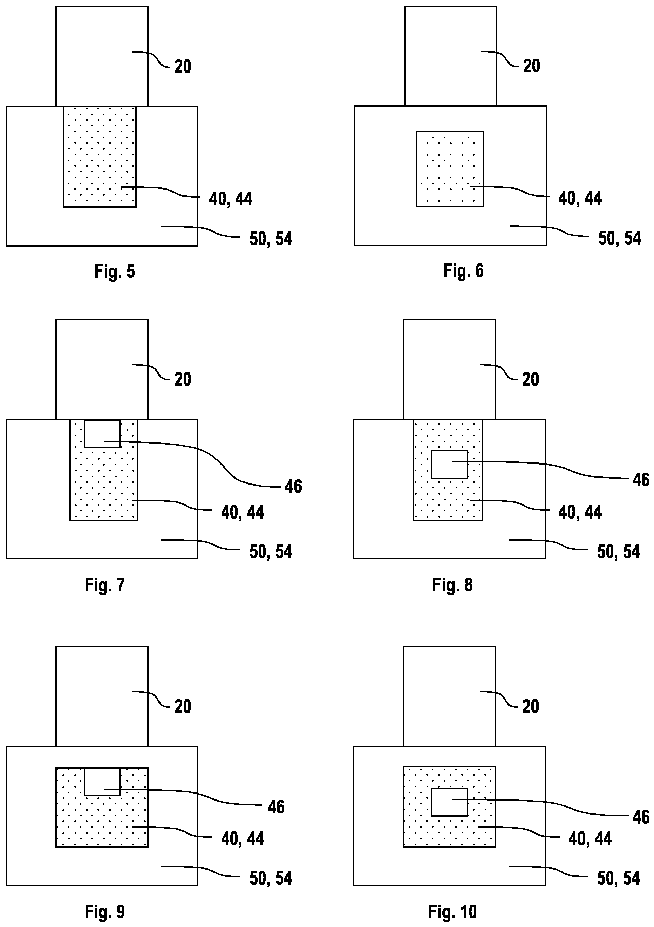

FIG. 5 shows a further cross-sectional view of the first embodiment of the battery system 10. The energy storage unit 20 is supported by and is in direct contact with the support element 40. The support element 40 has an extension in the second direction D2 which is smaller than an extension of the energy storage unit 20 in the second direction D2. The support element 40 therefore only covers part of the unit bottom surface 22 of the energy storage unit 20 and the unit bottom surface 22 is further in direct contact with the structure element 50. The second material 54 of the structure element 50 being in contact with the unit bottom surface of the energy storage unit 20 leads to an increase in mechanical stability and rigidity of the whole battery system 10.

FIG. 6 shows a cross-sectional view of a third embodiment of a battery system 10. The support element 40 is entirely encompassed by the structure element 50. The energy storage unit 20 therefore is in direct contact with the structure element 50 and is not in direct contact with the support element 40. In other words, a layer of the second material 54 is located between the energy storage unit 20 and the support element 40.

FIG. 7 shows a cross-sectional view of a fourth embodiment of a battery system 10. The support element 40 and the structure element 50 are similar to the respective components as shown in Fig. 5, but the support element 40 further comprises a hollow volume 46 extending in the first direction D1 along the extension of the support element 40 in the first direction. The hollow volume 46 is located on a side of the support element facing the energy storage unit 20 such that the hollow volume is in direct contact with the energy storage unit 20. The cross-section of the support element 40 can therefore be described as having a C- or U-like shape, with its opening facing the energy storage unit 20.

Hot vent gases expelled from the energy storage unit 20 in case of a thermal event can easily expand through the hollow volume 46 and therefore lead to an increase in the contact area with the first material 44. Melting of the first material 44 can therefore be enhanced.

FIG. 8 shows a cross-sectional view of a fifth embodiment of a battery system 10. The hollow volume 46 is located within the support element 40. The energy storage unit 20 and the support element 40 are therefore in direct contact with each other.

Hot vent gases expelled from the energy storage unit 20 in case of a thermal event can reach the hollow volume 46 as soon as the vent gases have melted the first material 44 between the energy storage unit 20 and the hollow volume 46 and can then easily expand through the hollow volume 46. Melting of the first material 44 can therefore be enhanced.

FIG. 9 shows a cross-sectional view of a sixth embodiment of a battery system 10 similar to the battery system 10 shown in FIG. 7. The support element 40 is encompassed by the structure element 50 such that a layer of the second material 54 is located between the energy storage unit 20 and the support element 40.

FIG. 10 shows a cross-sectional view of a seventh embodiment of a battery system 10 similar to the battery system 10 shown in FIG. 8. The support element 40 is encompassed by the structure element 50 such that a layer of the second material 54 is located between the energy storage unit 20 and the support element 40.

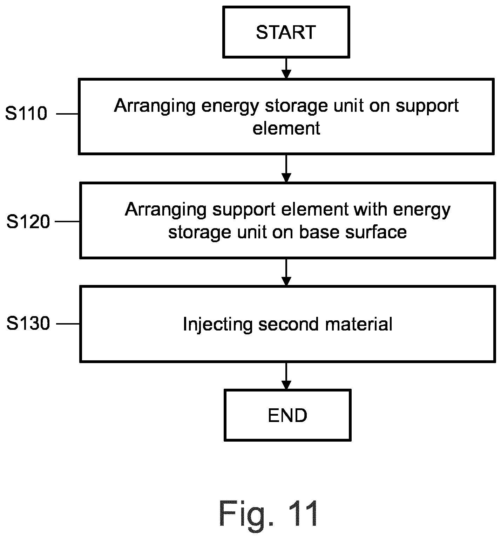

FIG. 11 shows a flow-chart of a method for assembling a battery system 10. The method comprises the step of arranging S 110 at least one energy storage unit 20 on at least one support element 40. The method further comprises the step of arranging S 120 the support element 40 with the at least one energy storage unit 20 on a base surface 12 of the battery system 10 such that the support element 40 couples a unit bottom surface 22 of the at least one energy storage unit 20 to the base surface 12. The method further comprises the step of injecting S130 a second material 54 into the battery system 10.

### Reference signs

- 10: battery system
- 12: base surface
- 20: energy storage unit
- 22: unit bottom surface
- 26: vent burst disc
- 30: housing
- 32: housing bottom surface
- 36: outlet
- 40: support element
- 44: first material
- 46: hollow volume
- 50: structure element
- 54: second material
- D1: first direction
- D2: second direction

- S110: arranging energy storage unit on support element
- S120: arranging support element with energy storage unit on base surface
- S130: injecting second material

## Claims

1. A battery system (10) comprising:
at least one energy storage unit (20);
a support element (40) extending in a first direction (D1) and made from a first material (44), wherein the support element (40) couples a unit bottom surface (22) of the at least one energy storage unit (20) to a base surface (12) of the battery system (10); and
a structure element (50) made from a second material (54) and arranged adjacent to the support element (40) at at least two sides of the support element (40), the two sides opposite to each other in a second direction (D2) perpendicular to the first direction (D1).

2. The battery system (10) of claim 1, wherein the first material (44) melts or significantly reduces in volume upon exposure to temperatures above a predetermined value, preferably above 100°C.

3. The battery system (10) of claims 1 or 2, wherein the first material (44) is one of Styrofoam, polyurethane, and PMMA foam or any other foam suitable for lost foam casting.

4. The battery system (10) of any one of the preceding claims, wherein the heat resistance of the first material (44) is lower than the heat resistance of the second material (54).

5. The battery system (10) of any one of the preceding claims, wherein the support element (40) has a solid cross-section in a plane perpendicular to the first direction (D 1).

6. The battery system (10) of any one of the preceding claims, wherein the support element (40) comprises a hollow volume (46) extending in the first direction.

7. The battery system (10) of any one of the preceding claims, further comprising a housing (30) and wherein the base surface (12) is a housing bottom surface (32) of the housing (30).

8. The battery system (10) of claim 7, further comprising at least two energy storage units (20) arranged adjacent to each other in the first direction (D1) and wherein the structure element (50) is arranged between the at least two energy storage units (20) and/or between ones of the at least two energy storage units (20) and the housing (30)

9. The battery system (10) of claims 7 or 8, wherein the support element (40) is in direct contact with the unit bottom surface (22) and the housing bottom surface (32).

10. The battery system (10) of any one of the preceding claims, wherein a space (60) defined by the unit bottom surface (22) of the at least one energy storage unit (20) and the base surface (12) is entirely occupied with the first material (44) and the second material (54).

11. The battery system (10) of any one of the preceding claims, wherein the at least one energy storage unit (20) comprises a vent burst disc (26) facing the support element (40).

12. The battery system (10) of any one of the preceding claims, wherein the vent burst disc (26) of the at least one energy storage unit (20) overlaps at least partially with the support element (40).

13. The battery system (10) of any one of the preceding claims, wherein the at least one energy storage unit (20) is one of battery cells and battery modules.

14. The battery system (10) of any one of claims 7 to 13, wherein the housing (30) comprises an outlet (36), the outlet (36) being in contact with the first material (44).

15. A method for assembling the battery system (10) of any one of the claims 1 to 14, the method comprising the steps of:
arranging (S110) at least one energy storage unit (20) on a support element (40), wherein the support element (40) extends in a first direction (D1) and is made of a first material (44);
arranging (S120) the support element (40) together with the at least one energy storage unit (20) on a base surface (12), such that the support element (40) couples a unit bottom surface (22) of the at least one energy storage unit (20) to the base surface (12); and
injecting (S130) a second material (54) into the battery system (10).

16. An energy storage system comprising the battery system (10) of any one of claims 1 to 14.
